Europäisches Patentamt

European Patent Office

Office européen des brevets

Publication number: **0 279 182**

**A1**

# EUROPEAN PATENT APPLICATION

Application number: **88100581.3**

Int. Cl.⁴: **G01L 3/04**

Date of filing: **16.01.88**

Priority: **20.01.87 SE 8700197**

Date of publication of application:
**24.08.88 Bulletin 88/34**

Designated Contracting States:
**DE GB IT**

Applicant: **ASEA BROWN BOVERI AB**

**S-721 83 Västeras(SE)**

Inventor: **Nordvall, Jan O**
**Rundhällsvägen 10**
**S-722 31 Västeras(SE)**

Representative: **Boecker, Joachim, Dr.-Ing. et al**
**Rathenauplatz 2-8**
**D-6000 Frankfurt a.M. 1(DE)**

Overload protection device for torque measuring transducers.

Overload protection device for torque measuring transducers comprising a measuring axle (1) intended for a certain maximum measurement range. According to the invention the measuring axle is connected with a second input axle (3) by means of a claw clutch (4,5) which is prestressed by a spring (6). A surrounding housing (2) may suitably be journalled riding on said axles and be prevented from rotating by a link to a fixed point. The housing is formed with an inwardly-directed brake flange (10) which, in the case of an unloaded axle, is spaced from the driving clutch half (4) by a distance considerably smaller than the height of the teeth of the claw clutch. The top angle alpha of the claw clutch and the force of the spring (6) are adapted such that the driving clutch half (4) starts moving towards the brake flange in the case of a torque load on the measuring axle which, with a satisfactory margin, exceeds the maximum measuring torque in either torque direction. In the case of a somewhat greater overload torque, the driving clutch half is pressed against the brake flange and an increasing part of the input torque is thus diverted on the housing.

FIG. 1

## Overload protection device for torque measuring transducers

The invention relates to an overload protection device for torque measuring transducers according to the precharacterising part of Claim 1. The device is preferably meant for torque measuring in rotating axles.

Transducer for measuring the torque in rotating axles are designed according to different principles. In some transducers the twist of the axle is measured over a certain axial length by the phase difference between the signals from two gear rings. In other transducers, the shearing stress in the axle is measured by different methods, for example by means of strain gauges, whereby the strain gauge and the signal processing circuit, mounted on the axle, are supplied via a rotating transformer, the measuring signal being transmitted in a wireless manner.

In still other transducers, the shearing stress is measured by magneto-elastic methods, such as, for example, in SE-B-167 387, in which the magnetic anisotrophy in the axle, caused by the shearing stress, is measured with the aid of a system of magnetizing and sensing magnetic poles arranged around the axle.

In a magneto-elastic transducer according to US-A-4,506,554, a measuring axle is provided with a measuring sleeve which, in two separate zones, has been formed with slots which in one zone has a +45° deviation from the axial direction and in the other zone a -45° deviation from the axial direction. The difference in reluctance between the two zones, arising when applying a torque, is sensed by a surrounding coil system.

In all of the afore-mentioned transducers, the demands concerning the choice of the stress level in the measuring axle at the upper limit of the measurement range are contradictory: To obtain a good signal/noise ratio and a small temperature dependence, a high maximum measuring stress should be chosen, but to obtain a good overload capacity without the zero point of the signal being changed, a low maximum measuring stress must be chosen, resulting in the signal/noise ratio and the temperature dependence being necessarily adversely affected.

Thus, in prior art transducers there is a conflict between the demand for a high measuring stress in the axle to obtain a good signal/noise ratio as well as a low temperature dependence and the demand for a low measuring stress in the axle to obtain a good overload capacity.

The invention aims at designing an overload protection device for torque measuring transducers of the above-mentioned kind which enables the combination of high stress in the measuring axle within the measuring range and a high overload protection against a torque exceeding the measuring range.

To achieve this aim the invention suggests an overload protection device for torque measuring transducers according to the introductory part of Claim 1, which is characterized by the features of the characterizing part of Claim 1.

Further developments of the invention are characterized by the features of the additional claims.

The invention eliminates the above described conflict with prior art transducers by constructing the measuring axle with such a slender dimension that the maximum measuring stress brings about a satisfactory twist of the measuring axle while at the same time achieving a high overload capacity by allowing - at a certain twist of the measuring axle - a stronger structural member to assume the greater part of the torque.

The invention will now be described in greater detail with reference to the accompanying drawings showing - by way of example - in

Figure 1 a first embodiment of an overload protection device according to the invention which, when the measuring axle is loaded above a certain limit, takes over the greater part of the excess load,

Figure 2 a second embodiment of a protection device according to the invention with a different design of the engagement means of the overload clutch,

Figure 3 a third embodiment of a protection device according to the invention with a third design of the engagement means of the overload clutch and a different design of the spring means,

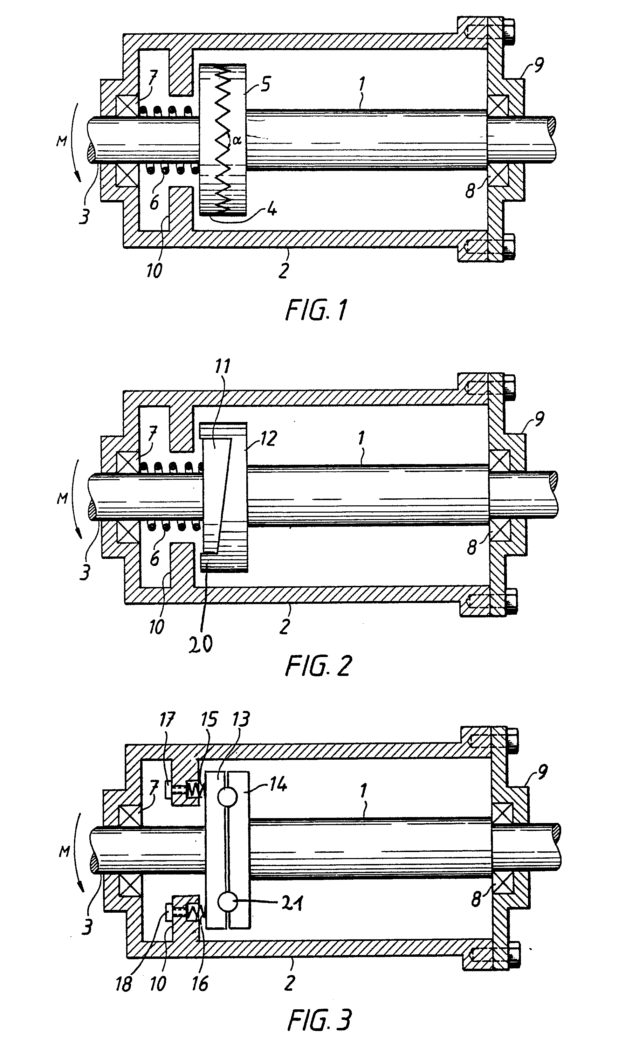

The device shown in Figure 1 comprises a measuring axle 1 of sufficient length to accommodate a torque transducer, for example according to the above-mentioned US-A 4,506,554, and a heavier structural member which is to take up the main part of the overload, in the shown case in the form of a housing 2. This housing 2 can often be suitably mounted riding on a second input axle 3 and on the measuring axle 1, the housing 2 then being prevented from rotating by means of a link to a fixed point (not shown).

The second input axle 3, loaded by a torque M, is connected to the measuring axle 1 by means of a claw clutch, the two halves 4 and 5 of which are provided with triangular, equally-sided teeth and are pre-stressed by a spring 6. The spring force is absorbed by the axial force-absorbing bearings 7 and 8 in the housing 2 and in the sealing lid 9 of the housing 2, respectively.

The housing 2 is formed with an inwardly-directed brake flange 10, which in unloaded state of the measuring axle is spaced from the driving clutch half 4 by a distance which is considerably smaller than the height of the teeth of the claw clutch. Either of the confronting surfaces on the brake flange 10 and the driving clutch half 4 is suitably provided with a surface layer of friction material.

The top angle alpha of the teeth of the claw clutch and the spring force of the spring 6 are adapted such that the driving clutch half 4 starts moving towards the brake flange 10 upon a torque load on the measuring axle 1 which, with a satisfactory margin, exceeds the maximum measuring torque in one or the other torque direction. In the case of a somewhat greater torque than just defined, the driving clutch half 4 is pressed against the brake flange 10. An increasing part of the input torque M is then transmitted to the housing 2 and, where appropriate, to the above-mentioned link. In this way, the measuring axle 1 is efficiently protected against overload. Upon a torque load within the measurement range, the two interconnected axles are able to rotate freely. How ever, in the case of a great overload, the driving clutch half 4 may become locked against the brake flange 10, which may restrict the application of the invention in certain cases.

It is apparent that the clutch with the cooperating spring means may be designed in a wide variety of ways. The only requirement for the clutch is that, when applying a torque, it develops an axially directed force that tries to space apart the two clutch halves and succeeds in doing so, when said force becomes greater than the clutch-engaging force develop by the spring means 6. Instead of providing the clutch with triangular teeth, wave-shaped engaging projections and depressions around the circumference of the two clutch-halves could be used. In place of a plurality of projections and depressions around the circumference, the contact surface between the two clutch-halves may consist of only one sloping annular surface as indicated in Figure 2, a design that emerges from the design in Figure 1 if there is only one tooth pitch extending around the entire circumference. To absorb radial forces and provide axial guidance, one of the clutch-halves may be provided with a peripheral projection 20.

Figure 3 shows an embodiment in which the coupling between the two clutch-halves is provided by a number of circumferentially spaced balls 21 resting in corresponding depressions in the end faces of the two clutch halves. Axial guidance may be provided by using projections 20 as indicated in Figure 2 or by carving relatively shallow grooves for the balls in the end faces adjacent the ball-receiving depressions and extending a short stretch circumferentially.

Instead of implementing the spring means by one centrally arranged spring 6, a plurality of springs 15 may be provided in depressions in the brake flange 10 spaced apart from one another circumferentially. To adjust the threshold of the overload device the preload of these springs 15,16 may be adjustable by screws 17 and 18.

## Claims

1. Overload protection device for torque measuring transducers comprising a measuring axle (1) intended for a certain maximum measurement range, **characterized** in that
- the measuring axle (1) is connected to a second input axle (3) by means of an overload clutch the two clutch halves (4,5) of which, in cooperation with a spring means (6) pre-stressing the clutch halves into engaging position, are adapted to space apart from each other in the axial direction upon a certain torque (M) applied,
- a surrounding housing (2) is formed with an inwardly-directed brake flange (10), which in the case of an unloaded measuring axle is spaced apart from the adjacent half (4) of the driving clutch by a distance which is considerably smaller than the axial spacing capacity of the clutch,
- and that said spring means (6) and the engagement means of the clutch are adapted such that the driving clutch half (4) starts moving towards the brake flange when the load on the measuring axle, with a satisfactory margin, exceeds the maximum measurement range in one or either torque direction and, when additional overload is applied, is pressed against the brake flange, the measuring axle thus being relieved.

2. Overload protection device according to Claim 1, **characterized** in that the clutch is designed as a claw clutch with triangular, equally-sided teeth and that the spring means (6) and the top angle (alpha) of the teeth of the claw clutch are dimensioned such that the clutch halves space apart when the torque applied, with a satisfac tory margin, exceeds the maximum measuring range of the transducer.

Jan. 10, 1988
21 572 ГЕ

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A- 891 018 (C E VAWTER) --- | | G 01 L 3/04 |
| A | US-A-2 403 952 (A C RUGE) --- | | |
| A | DE-A1-2 056 835 (FREDE AUTOMATIC KG) --- | | |
| A | Patent Abstracts of Japan, Vol 6, No 075 P114 abstract of JP - A - 57 12336 (ISEKI NOKI K.K.) 22-01-1982 --- | | |

**TECHNICAL FIELDS SEARCHED (Int. Cl.4)**

G 01 L

The present search report has been drawn up for all claims

| Place of search | Date of completion of the search | Examiner |
|---|---|---|
| STOCKHOLM | 1988-04-18 | JAKOBSSSON L. |